# EUROPÄISCHE PATENTANMELDUNG

(11) **EP 3 800 573 A1**
(43) Veröffentlichungstag der Anmeldung: **07.04.2021**
(21) Anmeldenummer: 19201114.6
(22) Anmeldetag: 02.10.2019
(51) Int. Cl.: G06F 30/13, G06F 111/20

(54) **VERFAHREN UND VORRICHTUNG ZUM GENERIEREN EINES DIGITALEN GEBÄUDEMODELLS**

(71) Anmelder: Siemens Schweiz AG, 8047 Zürich (CH)
(72) Erfinder: Frey, Christian, 6314 Unterägeri (CH); Klein, Wolfram, 85579 Neubiberg (DE); Mayer, Hermann Georg, 83209 Prien am Chiemsee (DE)
(74) Vertreter: Maier, Daniel Oliver

(57) **Zusammenfassung**

Erfindungsgemäß wird ein initiales Gebäudemodell (IM) eingelesen und aus diesem eine Erstellerangabe (SRC) über dessen Ersteller extrahiert. Anhand der Erstellerangabe (SRC) wird eine erstellerspezifische Objektmusterbibliothek (BIB) geladen, in der einem jeweiligen Objektmuster (OM) ein Gebäudeelement-Datensatz (EL) zugeordnet ist. Das jeweilige Objektmuster (OM) wird mittels eines Mustererkennungsverfahrens (OCR) mit Objekten (OB) des initialen Gebäudemodells (IM) korreliert. Dabei wird einem mit dem jeweiligen Objektmuster (OM) korrelierenden Objekt (OB) der diesem Objektmuster (OM) zugeordnete Gebäudeelement-Datensatz (EL) als Annotation zugeordnet. Anhand des initialen Gebäudemodells (IM) sowie der zugeordneten Annotationen wird dann ein annotiertes digitales Gebäudemodell (DM) generiert und ausgegeben.

## Beschreibung

Zeitgemäße digitale Gebäudemodelle, insbesondere sogenannte BIM-Modelle (BIM: Building Information Models) enthalten in der Regel eine Vielzahl von Gebäudeelementen, die semantisch annotiert sind. Eine Funktion oder Bedeutung dieser Gebäudeelemente ist somit nicht nur anhand ihrer Geometrie oder ihrer Position im Gebäude ableitbar, sondern wird auch explizit in maschinenlesbarer Form spezifiziert. Dies kann sich insbesondere bei einer automatischen Bearbeitung von Gebäudemodellen als sehr vorteilhaft erweisen und reduziert in vielen Fällen einen zur Erstellung spezifischer Modelle erforderlichen Aufwand. So lassen sich aus geeigneten BIM-Modellen in der Regel auf einfache Weise spezifische Modelle für eine Energiesimulation erzeugen, oder man kann eine vorhandene Rauminformation nutzen, um Brandmelder automatisch zu platzieren oder um Reinigungspläne zu erstellen.

Anders als viele moderne BIM-Modelle weisen herkömmliche Gebäudemodelle, z.B. Papierbaupläne oder PDF-Dateien aus CAD-Entwürfen in der Regel keine stringente Semantik und/oder nur uneinheitliche semantische Annotationen auf, die nur schwer maschinell erfassbar sind. Aus diesem Grund ist bei herkömmlichen Gebäudemodellen eine Ausleitung von Simulationsmodellen oder eine Bearbeitung von Konstruktionsdaten häufig mit hohem manuellem Aufwand verbunden.

Tatsächlich liegt ein Großteil aller Gebäudepläne bisher nur in herkömmlicher Form vor. In vielen Fällen unterbleibt ihre weitergehende Digitalisierung aufgrund des hohen Aufwands.

Es ist Aufgabe der vorliegenden Erfindung, ein Verfahren und eine Vorrichtung zum Generieren eines digitalen Gebäudemodells zu schaffen, die einen geringeren Aufwand erfordern. Gelöst wird diese Aufgabe durch ein Verfahren mit den Merkmalen des Patentanspruchs 1, durch eine Vorrichtung mit den Merkmalen des Patentanspruchs 9, durch ein Computerprogrammprodukt mit den Merkmalen des Patentanspruch 10 sowie durch ein computerlesbares Speichermedium mit den Merkmalen des Patentanspruchs 11.

Zum Generieren eines digitalen Gebäudemodells wird ein initiales Gebäudemodell eingelesen und aus diesem eine Erstellerangabe über einen Ersteller des initialen Gebäudemodells extrahiert. Das initiale Gebäudemodell kann insbesondere ein Scan eines herkömmlichen Bauplans eines Gebäudes, ein 2- oder 3d-dimensionaler Scan des Gebäudes oder ein CAD- oder BIM-Modell des Gebäudes sein. Unter einem Ersteller kann hierbei insbesondere ein Konstrukteur, ein Ingenieurbüro, ein Architekturbüro, ein Urheber, ein Anbieter, ein Erstellungswerkzeug und/oder eine andere an einer Erstellung des initialen Gebäudemodells beteiligte Instanz verstanden werden. Als Erstellerangabe kann insbesondere ein Firmenname, ein Firmenlogo, eine Signatur und/oder ein Firmenstempel extrahiert werden. Anhand der Erstellerangabe wird eine erstellerspezifische Objektmusterbibliothek geladen, in der einem jeweiligen Objektmuster ein Gebäudeelement-Datensatz zugeordnet ist. Ein Objektmuster kann hierbei insbesondere eine Musterdarstellung für ein Gebäudeelement sein. Erfindungsgemäß wird das jeweilige Objektmuster mittels eines Mustererkennungsverfahrens mit Objekten des initialen Gebäudemodells korreliert. Die zu korrelierenden Objekte können dabei insbesondere Symbole oder andere Darstellungen für Gebäudeelemente sein. Zum Korrelieren eines jeweiligen Objektmusters mit einem Objekt des initialen Gebäudemodells kann insbesondere ein Ähnlichkeitsvergleich durchgeführt werden. Erfindungsgemäß wird einem mit dem jeweiligen Objektmuster korrelierenden Objekt der diesem Objektmuster zugeordnete Gebäudeelement-Datensatz als Annotation zugeordnet. Anhand des initialen Gebäudemodells sowie der zugeordneten Annotationen wird dann ein annotiertes digitales Gebäudemodell generiert und ausgegeben.

Zum Ausführen des erfindungsgemäßen Verfahrens sind eine Vorrichtung zum Generieren eines digitalen Gebäudemodells, ein Computerprogrammprodukt sowie ein computerlesbares, vorzugsweise nichtflüchtiges Speichermedium vorgesehen.

Das erfindungsgemäße Verfahren, die erfindungsgemäße Vorrichtung sowie das erfindungsgemäße Computerprogrammprodukt können insbesondere mittels eines oder mehrerer Computer, eines oder mehrerer Prozessoren, anwendungsspezifischer integrierter Schaltungen (ASIC), digitaler Signalprozessoren (DSP), einer Cloud-Infrastruktur und/oder sogenannter "Field Programmable Gate Arrays" (FPGA) ausgeführt werden.

Der Erfindung liegt unter anderem die Beobachtung zugrunde, dass zwar einerseits Gebäudeelemente oder Symbole in vielen Bauplänen nicht einheitlich oder nicht normgemäß verwendet werden, doch andererseits viele Konstrukteure, Ingenieurbüros oder andere Ersteller sich durchaus einheitlich an eigene bzw. hauseigene Vorgaben halten. Sowie also für einen bestimmten Ersteller spezifische Objektmuster verfügbar sind, können damit nicht nur ein aktueller Bauplan, sondern viele weitere Baupläne dieses Erstellers verarbeitet werden. Auf diese Weise kann ein Aufwand zur Generierung von annotierten digitalen Gebäudemodellen beträchtlich reduziert werden. Darüber hinaus kann durch eine Selektion einer erstellerspezifischen Objektmusterbibliothek die Menge von zu erkennenden Objektmustern auf die Objektmuster eines einzigen Erstellers reduziert werden, was einen Mustererkennungsaufwand erheblich verringern kann.

Vorteilhafte Ausführungsformen und Weiterbildungen der Erfindung sind in den abhängigen Ansprüchen angegeben.

Nach einer vorteilhaften Weiterbildung der Erfindung kann im initialen Gebäudemodell mittels des Mustererkennungsverfahrens eine lokale Korrelation eines weiteren Objekts mit einer weiteren Annotation erfasst werden. Damit können die weitere Annotation als Gebäudeelement-Datensatz und das weitere Objekt in Form eines weiteren Objektmusters einander zugeordnet in der erstellerspezifischen Objektmusterbibliothek gespeichert werden. Unter einer lokalen Korrelation kann hierbei insbesondere eine Korrelation hinsichtlich einer Position und/oder eines gegenseitigen Abstands des weiteren Objekts und der weiteren Annotation verstanden werden. Vorzugsweise können weitere Objekte im initialen Gebäudemodell gesucht werden, die jeweils zu einer weiteren Annotation benachbart sind. Darüber hinaus kann beispielsweise eine Legende des initialen Gebäudemodells mittels des Mustererkennungsverfahrens gesucht und/oder erfasst werden. Die in einer gefundenen Legende einander zugeordneten weiteren Objekte und weiteren Annotationen können entsprechend in der erstellerspezifischen Objektmusterbibliothek gespeichert werden. Auf diese Weise können erstellerspezifische Objektmusterbibliotheken im laufenden Betrieb durch neue Objektmuster und neue Gebäudeelement-Datensätze weiter ergänzt und vervollständigt werden. Vorteilhafterweise kann für den Fall, dass ein Objekt oder ein Objektmuster nicht eindeutig zugeordnet werden kann, vorgesehen sein, dass ein Gebäudeelement-Datensatz oder weitere Angaben durch eine Aufforderung zur Benutzereingabe abgefragt werden.

Nach einer weiteren vorteilhaften Weiterbildung der Erfindung kann die Speicherung des weiteren Objektmusters und/oder der weiteren Annotation in einer Blockchain protokolliert werden. Auf diese Weise können Änderungen von erstellerspezifischen Objektmusterbibliotheken zuverlässig nachverfolgt und gegebenenfalls korrigiert oder rückgängig gemacht werden. Darüber hinaus kann vorgesehen sein, dass an einer Änderung einer erstellerspezifischen Objektmusterbibliothek beteiligte Programme oder Geräte, wie z.B. Scanner vorher authentifiziert, autorisiert und/oder verifiziert werden.

Vorzugsweise kann das weitere Objekt mit in der erstellerspezifischen Objektmusterbibliothek enthaltenen Objektmustern, vorzugsweise durch einen Ähnlichkeitsvergleich korreliert werden. Ein Ähnlichkeitsvergleich kann hierbei insbesondere mittels einer Support-Vector-Machine durchgeführt werden. Falls das weitere Objekt mit einem in der erstellerspezifischen Objektmusterbibliothek enthaltenen Objektmuster korreliert, kann das weitere Objektmuster als zusätzliche Darstellung dieses Objektmusters in der erstellerspezifischen Objektmusterbibliothek gespeichert werden. Andernfalls kann das weitere Objektmuster in Zuordnung zur weiteren Annotation in der erstellerspezifischen Objektmusterbibliothek gespeichert werden.

Weiterhin kann die einem jeweiligen Objekt zugeordnete Annotation in positioneller Zuordnung, insbesondere benachbart zu diesem Objekt ausgegeben werden. Eine positionelle Zuordnung oder Platzierung des zugeordneten Objekts kann gegebenenfalls auch in erstellerspezifischer Weise erfolgen.

Gemäß einer weiteren vorteilhaften Ausführungsform der Erfindung kann das initiale Gebäudemodell durch Einscannen eines Gebäudebauplans erzeugt werden. Auf diese Weise kann ein herkömmlicher Bauplan auf einfache Weise durch Annotationen ergänzt werden.

Vorzugsweise kann das erfindungsgemäße Verfahren auf einem Scanner oder auf einem Scanner/Drucker-Kombinationsgerät ablaufen. Bei einem Scanner/Drucker-Kombinationsgerät kann ein herkömmlicher Bauplan eingelesen und direkt eine automatisch annotierte Version dieses Bauplans ausgedruckt werden.

Ferner kann aus dem initialen Gebäudemodell eine Koordinatenangabe vorzugsweise mittels des Mustererkennungsverfahrens extrahiert werden. Das initiale Gebäudemodell und/oder das annotierte digitale Gebäudemodell kann dann abhängig von der erfassten Koordinatenangabe skaliert werden.

Ein Ausführungsbeispiel der Erfindung wird nachfolgend anhand der Zeichnung näher erläutert. Dabei veranschaulichen jeweils in schematischer Darstellung:
- Figur 1: eine erfindungsgemäße Vorrichtung zum Generieren eines annotierten digitalen Gebäudemodells,
- Figur 2: ein Annotieren von Gebäudeelementen, und
- Figur 3: eine Erweiterung einer erstellerspezifischen Objektbibliothek.

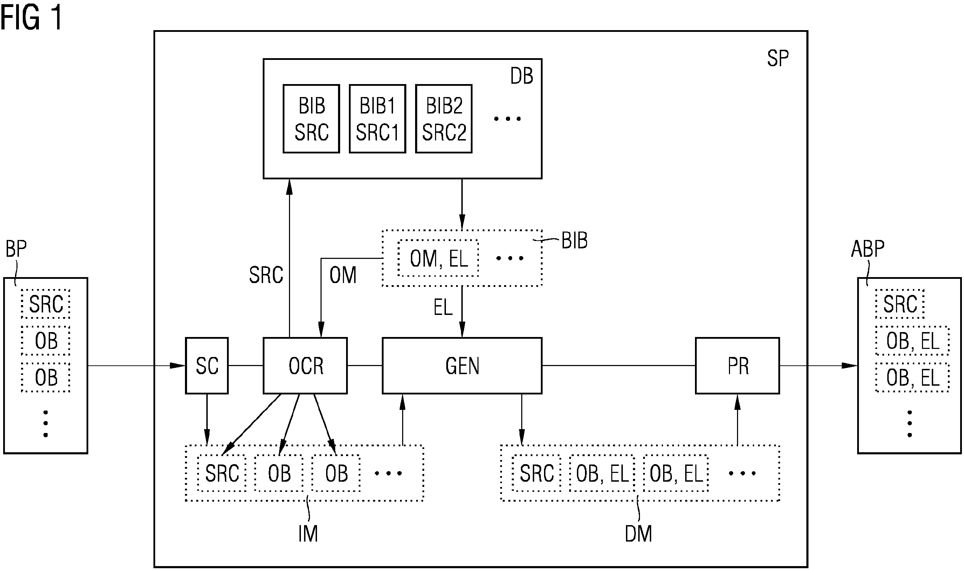

Figur 1 zeigt eine erfindungsgemäße Vorrichtung SP zum Generieren eines digitalen Gebäudemodells DM in schematischer Darstellung. Die Vorrichtung ist im vorliegenden Ausführungsbeispiel als Scanner/Drucker-Kombinationsgerät SP mit einem Scanner SC und einem Drucker PR implementiert. Alternativ oder zusätzlich zum Drucker PR kann auch ein BIM-Planungssystem vorgesehen sein. Die Vorrichtung SP dient zum Scannen von Gebäudebauplänen, zum Generieren annotierter Gebäudemodelle anhand der eingescannten Gebäudebaupläne sowie zum Ausgeben der Gebäudemodelle als annotierte Versionen der Gebäudebaupläne.

Die Vorrichtung SP verfügt über einen Prozessor zum Ausführen von Verfahrensschritten des erfindungsgemäßen Verfahrens sowie über einen mit dem Prozessor gekoppelten Speicher zum Speichern von zu verarbeitenden Daten.

Im vorliegenden Ausführungsbeispiel wird ein herkömmlicher Bauplan BP eines Gebäudes durch den Scanner SC eingescannt. Das Gebäude kann beispielsweise ein öffentliches oder privates Gebäude, ein Wohngebäude, ein Bürogebäude, ein Fabrikgebäude oder ein anderes Bauwerk sein. Der Bauplan BP stellt eine Vielzahl von Gebäudeelementen, wie z.B. Wände, Decken, Böden, Fenster, Türen, Treppen und/oder andere Konstruktionselemente als grafische Objekte OB dar, insbesondere in Form von Symbolen, Bezugszeichen, Piktogrammen oder anderen Darstellungen. Aus Übersichtlichkeitsgründen sind in Figur 1 nur jeweils zwei Objekte OB explizit dargestellt.

Darüber hinaus enthält der Bauplan BP eine Erstellerangabe SRC, beispielsweise einen Firmennamen, ein Firmenlogo, eine Signatur und/oder einen Firmenstempel eines Erstellers des Bauplans BP. Beim Ersteller kann es sich um einen Konstrukteur, ein Ingenieurbüro, ein Architekturbüro, einen Anbieter, ein Erstellungswerkzeug und/oder eine andere an einer Erstellung des Bauplans BP beteiligte Instanz handeln. Durch die Erstellerangabe SRC wird der betreffende Ersteller identifiziert.

Der eingescannte Bauplan stellt ein initiales digitales Gebäudemodell IM des Gebäudes dar. Alternativ oder zusätzlich kann als initiales digitales Gebäudemodell auch ein 2- oder 3-dimensionaler Scan des Gebäudes oder ein CAD- oder BIM-Modell des Gebäudes verwendet werden.

Das initiale Gebäudemodell IM wird mittels eines im Kombinationsgerät SP implementierten und mit dem Scanner SC gekoppelten Mustererkennungsverfahrens OCR analysiert. Letzteres kann beispielsweise durch ein Bildverarbeitungsverfahren und/oder durch ein Texterkennungsverfahren, ein sogenanntes OCR-Verfahren (OCR: Optical Character Recognition) realisiert sein. Ein Ziel der Analyse besteht darin, die im initialen Gebäudemodell IM enthaltene Erstellerangabe SRC zu erkennen und ihren Textinhalt zu extrahieren sowie im initialen Gebäudemodell IM enthaltene Objekte OB zu erkennen. Zur Erkennung werden grafische Elemente des initialen Gebäudemodells IM mit vorgegebenen grafischen Mustern korreliert.

Eine solche Korrelation kann beispielsweise mittels eines Ähnlichkeitsvergleichs oder mittels eines 2-dimensionalen Korrelationsintegrals ermittelt werden. Darüber hinaus können die grafischen Elemente mit den grafischen Mustern hinsichtlich ihrer Position korreliert werden. So kann auf vorteilhafte Weise eine Konvention ausgenutzt werden, wonach Erstellerangaben bevorzugt in einer Ecke des Bauplans BP angeordnet sind. Weiterhin können die grafischen Elemente mit den grafischen Mustern hinsichtlich ihrer Einordnung in eine Hierarchie des Gebäudes korreliert werden. Eine solche Gebäudehierarchie kann beispielsweise darauf aufbauen, dass das Gebäude mehrere Stockwerke umfasst, die ihrerseits jeweils mehrere Räume enthalten, die wiederum jeweils mehrere Wände, Türen oder andere Raumelemente umfassen können.

Erfindungsgemäß wird durch das Mustererkennungsverfahren OCR zunächst die Erstellerangabe SRC im initialen Gebäudemodell IM, z.B. anhand eines vorgegebenen Musters für typische Erstellerangaben, gesucht und ihr Textinhalt extrahiert. Der Textinhalt wird im Folgenden ebenfalls als Erstellerangabe SRC bezeichnet. Die Erstelleangabe SRC wird vom Mustererkennungsverfahren OCR zu einer Datenbank DB des Kombinationsgeräts SP übermittelt.

Die Datenbank DB enthält eine Vielzahl von erstellerspezifischen Objektmusterbibliotheken, von denen in Figur 1 aus Übersichtlichkeitsgründen nur drei Objektmusterbibliotheken BIB, BIB1 und BIB2 explizit dargestellt sind. Die Objektmusterbibliothek BIB ist hierbei der Erstellerangabe SRC, die Objektmusterbibliothek BIB1 einer Erstellerangabe SRC1 und die Objektmusterbibliothek BIB2 einer Erstellerangabe SRC2 zugeordnet. Durch die Erstellerangaben SRC, SRC1 und SRC2 wird jeweils derjenige Ersteller identifiziert, dem die betreffende Objektmusterbibliothek BIB, BIB1 bzw. BIB2 zugeordnet ist.

Im vorliegenden Ausführungsbeispiel enthalten die erstellerspezifischen Objektmusterbibliotheken BIB, BIB1 und BIB2 jeweils für den zugeordneten Ersteller spezifische oder charakteristische Musterdarstellungen von Gebäudeelementen. Dabei ist einer jeweiligen Musterdarstellung für ein Gebäudeelement ein dieses Gebäudeelement beschreibender, semantischer Gebäudeelement-Datensatz zugeordnet. Derartige Musterdarstellungen werden im Folgenden auch als Objektmuster bezeichnet. Ein jeweiliger Gebäudeelement-Datensatz gibt vorzugsweise eine Funktion, eine Bedeutung, eine Verwendung, eine Eigenschaft und/oder weitere Parameter des betreffenden Gebäudeelements an.

Anhand der übermittelten Erstellerangabe SRC wird durch die Datenbank DB die dieser Erstellerangabe SRC zugeordnete Objektmusterbibliothek BIB selektiert und geladen. Die Objektmusterbibliothek BIB enthält typischerweise eine Vielzahl von erstellerspezifischen Objektmustern mit jeweils zugeordnetem Gebäudeelement-Datensatz. Als Objektmuster können beispielsweise erstellerspezifische Musterdarstellungen von Symbolen für Türen, Heizkörper, Brandmelder oder Motoren vorgesehen sein, denen jeweils der entsprechende Begriff "Tür", "Heizkörper", "Brandmelder" bzw. "Motor" ggf. zusammen mit einer zusätzlichen Beschreibung als Gebäudeelement-Datensatz zugeordnet ist. Aus Übersichtlichkeitsgründen ist in Figur 1 nur ein einziges erstellerspezfisches Objektmuster OM für ein Gebäudeelement explizit dargestellt, dem ein dieses Gebäudeelement beschreibender Gebäudeelement-Datensatz EL zugeordnet ist.

Das Objektmuster OM wird dem Mustererkennungsverfahren OCR zugeführt, das dieses Objektmuster OM im initialen Gebäudemodell IM zu erkennen bzw. zu finden versucht. Im vorliegenden Ausführungsbeispiel werden durch Korrelation mit dem Objektmuster OM die Objekte OB im initialen Gebäudemodell IM als Instanzen des Objektmusters OM bzw. des hierdurch dargestellten Gebäudeelements erkannt.

Vorzugsweise kann mittels des Mustererkennungsverfahrens OCR zu einem erkannten Objekt OB auch eine jeweilige Raumbezeichnung aus dem initialen Gebäudemodell IM extrahiert werden. Dieses Objekt OB kann so einer Position oder einem Raum im Gebäude zugeordnet werden.

Erfindungsgemäß sollen die Instanzen OB des Objektmusters OM durch den diesem Objektmuster OM zugeordneten Gebäudeelement-Datensatz EL annotiert werden. Zu diesem Zweck wird das initiale Gebäudemodell IM durch einen mit dem Mustererkennungsverfahren OCR gekoppelten Modellgenerator GEN eingelesen. Darüber hinaus wird dem Modellgenerator GEN der dem Objektmuster OM zugeordnete Gebäudeelement-Datensatz EL aus der Objektmusterbibliothek BIB zugeführt. Der Modellgenerator GEN ordnet daraufhin den Gebäudeelement-Datensatz EL allen als Instanzen des Objektmusters OM erkannten Objekten OB als Annotation zu. Auf diese Weise wird das initiale Gebäudemodell IM um die zugeordneten Annotationen ergänzt.

Das ergänzte Gebäudemodell IM wird durch den Modellgenerator GEN vorzugsweise in ein BIM-Modell umgesetzt, das als annotiertes digitales Gebäudemodell DM des Gebäudes vorzugsweise in einem IFC-Format (IFC: Industry Foundation Classes) ausgegeben und gespeichert wird. Aufgrund der maschinenlesbaren semantischen Annotationen können aus dem digitalen Gebäudemodell DM in der Regel auf einfache Weise verwendungsspezifische Gebäudemodelle, z.B. für Energiesimulationen, für Reinigungspläne, für Wartungspläne und/oder zur Platzierung von Brandmeldern ausgeleitet werden.

Im vorliegenden Ausführungsbeispiel wird das annotierte digitale Gebäudemodells DM über den Drucker PR ausgegeben. Dieser druckt das annotierte digitale Gebäudemodell DM in Form eines annotierten Bauplans ABP des Gebäudes aus. Dabei werden die Annotationen EL vorzugsweise benachbart zu den jeweiligen Objekten OB platziert.

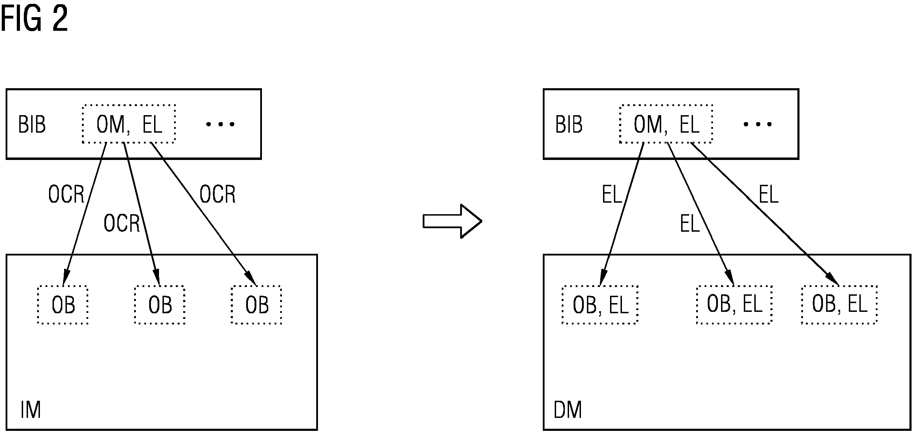

Figur 2 veranschaulicht ein Annotieren von Gebäudeelementen in detaillierterer Darstellung. Insofern in Figur 2 die gleichen oder korrespondierende Bezugszeichen verwendet werden wie in Figur 1, werden hierdurch die gleichen oder korrespondierende Entitäten bezeichnet, die vorzugsweise wie oben beschrieben implementiert oder realisiert sind.

Wie im linken Teil von Figur 2 angedeutet, werden durch das Mustererkennungsverfahren OCR zunächst Instanzen OB des Objektmusters OM im initialen Gebäudemodell IM gesucht und erkannt. Den erkannten Instanzen OB wird anschließend, wie im rechten Teil von Figur 2 angedeutet, jeweils der zum Objektmuster OM gehörige Gebäudeelement-Datensatz EL als Annotation zugeordnet.

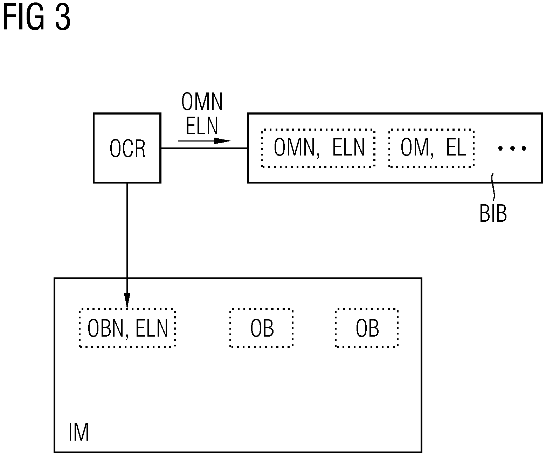

Figur 3 veranschaulicht eine Erweiterung der erstellerspezifischen Objektmusterbibliothek BIB. Insofern in Figur 2 die gleichen oder korrespondierende Bezugszeichen verwendet werden wie in den vorangegangenen Figuren, werden hierdurch die gleichen oder korrespondierende Entitäten bezeichnet, die vorzugsweise wie oben beschrieben, implementiert oder realisiert sind.

Eine solche Erweiterung von Objektmusterbibliotheken kann insbesondere im laufenden Betrieb des oben beschriebenen Verfahrens erfolgen. Nach Selektion einer jeweiligen erstellerspezifischen Objektmusterbibliothek, hier BIB, wird mittels des Mustererkennungsverfahrens OCR versucht, im initialen Gebäudemodell IM eine lokale Korrelation zwischen weiteren Objekten und weiteren Annotationen zu finden. Vorzugsweise können weitere Objekte gesucht werden, die jeweils zu einer weiteren Annotation benachbart sind. Darüber hinaus kann beispielsweise eine Legende des initialen Gebäudemodells IM gesucht und/oder erfasst werden, in der, weitere Objekte weiteren Annotationen lokal gegenübergestellt sind.

Für das vorliegende Ausführungsbeispiel sei angenommen, dass durch das Mustererkennungsverfahren OCR ein weiteres Objekt OBN gefunden wird, in dessen unmittelbarer Nachbarschaft eine weitere Annotation ELN erkannt wird.

Das gefundene weitere Objekt OBN wird daraufhin in der selektierten Objektmusterbibliothek BIB durch Korrelieren mit den darin enthaltenen Objektmustern, hier OM, gesucht. Zu diesem Zweck können Ähnlichkeitsvergleiche vorzugsweise mittels einer Support-Vector-Machine durchgeführt werden. Sofern das weitere Objekt OBN nicht in der selektierten Objektmusterbibliothek BIB gefunden wird, werden das weitere Objekt OBN in Form eines neuen Objektmusters OMN und die weitere Annotation ELN als neuer Gebäudeelement-Datensatz einander zugeordnet in der selektierten Objektmusterbibliothek BIB gespeichert. Andernfalls kann das weitere Objekt OBN als weitere Ausprägung eines bereits bekannten Objektmusters, hier OM, mit diesem als Alternativdarstellung in der selektierten Objektmusterbibliothek BIB gespeichert werden.

Auf diese Weise kann das erfindungsgemäße Verfahren mit Objektmusterbibliotheken, die nur wenige oder keine Objektmuster enthalten, gestartet werden, um die Objektmusterbibliotheken im laufenden Betrieb sukzessive durch neue Objektmuster und neue Gebäudeelement-Datensätze zu ergänzen.

## Patentansprüche

1. Computerimplementiertes Verfahren zum Generieren eines digitalen Gebäudemodells (DM), wobei
a) ein initiales Gebäudemodell (IM) eingelesen wird,
b) aus dem initialen Gebäudemodell (IM) eine Erstellerangabe (SRC) über einen Ersteller des initialen Gebäudemodells (IM) extrahiert wird,
c) anhand der Erstellerangabe (SRC) eine erstellerspezifische Objektmusterbibliothek (BIB) geladen wird, in der einem je-weiligen Objektmuster (OM) ein Gebäudeelement-Datensatz (EL) zugeordnet ist,
d) das jeweilige Objektmuster (OM) mittels eines Mustererkennungsverfahrens (OCR) mit Objekten (OB) des initialen Gebäudemodells (IM) korreliert wird,
e) einem mit dem jeweiligen Objektmuster (OM) korrelierenden Objekt (OB) der diesem Objektmuster (OM) zugeordnete Gebäudeelement-Datensatz (EL) als Annotation zugeordnet wird, und
f) anhand des initialen Gebäudemodells (IM) und der zugeordneten Annotationen ein annotiertes digitales Gebäudemodell (DM) generiert und ausgegeben wird.

2. Verfahren nach Anspruch 1, **dadurch gekennzeichnet,**
**dass** im initialen Gebäudemodell (IM) mittels des Mustererkennungsverfahrens (OCR) eine lokale Korrelation eines weiteren Objekts (OBN) mit einer weiteren Annotation (ELN) erfasst wird, und
**dass** die weitere Annotation (ELN) als Gebäudeelement-Datensatz und das weitere Objekt (OBN) in Form eines weiteren Objektmusters (OMN) einander zugeordnet in der erstellerspezifischen Objektmusterbibliothek (BIB) gespeichert werden.

3. Verfahren nach Anspruch 2, **dadurch gekennzeichnet, dass** die Speicherung des weiteren Objektmusters (OMN) und/oder der weiteren Annotation (ELN) in einer Blockchain protokolliert wird.

4. Verfahren nach Anspruch 2 oder 3, **dadurch gekennzeichnet, dass**
- das weitere Objekt (OBN) mit in der erstellerspezifischen Objektmusterbibliothek (BIB) enthaltenen Objektmustern (OM) korreliert wird, und
- falls das weitere Objekt (OBN) mit einem in der erstellerspezifischen Objektmusterbibliothek (BIB) enthaltenen Objektmuster (OM) korreliert, das weitere Objektmuster (OMN) als zusätzliche Darstellung dieses Objektmusters (OM) in der erstellerspezifischen Objektmusterbibliothek (BIB) gespeichert wird, und/oder
andernfalls das weitere Objektmuster (OMN) in Zuordnung zur weiteren Annotation (ELN) in der erstellerspezifischen Objektmusterbibliothek (BIB) gespeichert wird.

5. Verfahren nach einem der vorhergehenden Ansprüche, **dadurch gekennzeichnet, dass**
die einem jeweiligen Objekt (OB) zugeordnete Annotation in positioneller Zuordnung zu diesem Objekt (OB) ausgegeben wird.

6. Verfahren nach einem der vorhergehenden Ansprüche, **dadurch gekennzeichnet, dass**
das initiale Gebäudemodell (IM) durch Einscannen eines Gebäudebauplans (BP) erzeugt wird.

7. Verfahren nach einem der vorhergehenden Ansprüche, **dadurch gekennzeichnet, dass**
das Verfahren auf einem Scanner oder auf einem Scanner/Drucker-Kombinationsgerät (SP) abläuft.

8. Verfahren nach einem der vorhergehenden Ansprüche, **dadurch gekennzeichnet,**
**dass** aus dem initialen Gebäudemodell (IM) eine Koordinatenangabe extrahiert wird, und
**dass** das initiale Gebäudemodell (IM) und/oder das annotierte digitale Gebäudemodell (DM) abhängig von der erfassten Koordinatenangabe skaliert wird.

9. Vorrichtung zum Generieren eines digitalen Gebäudemodells (DM), eingerichtet zum Ausführen eines Verfahrens nach einem der vorhergehenden Ansprüche.

10. Computerprogrammprodukt, eingerichtet zum Ausführen eines Verfahrens nach einem der Ansprüche 1 bis 8.

11. Computerlesbares Speichermedium mit einem Computerprogrammprodukt nach Anspruch 10.
